# EUROPÄISCHE PATENTSCHRIFT

(11) **EP 2 504 208 B1**
(45) Veröffentlichungstag und Bekanntmachung des Hinweises auf die Patenterteilung: **31.07.2013**
(21) Anmeldenummer: 10779710.2
(22) Anmeldetag: 11.11.2010
(51) Int. Cl.: B60T 7/12, B60T 13/66

(54) **VERFAHREN ZUM VERHINDERN DES WEGROLLENS EINES FAHRZEUGS, SOWIE COMPUTERPROGRAMMPRODUKT**
METHOD FOR PREVENTING A VEHICLE FROM ROLLING AWAY, AND COMPUTER PROGRAM PRODUCT
PROCÉDÉ DESTINÉ À EMPÊCHER LA DÉRIVE D'UN VÉHICULE, ET PRODUIT-PROGRAMME D'ORDINATEUR

(30) Priorität: 27.11.2009 DE 102009055921
(43) Veröffentlichungstag der Anmeldung: 03.10.2012
(73) Patentinhaber: WABCO GmbH, 30453 Hannover (DE)
(72) Erfinder: DIEKMEYER, Heinrich, 30890 Barsinghausen (DE); EGGEBRECHT, Detlev, 30519 Hannover (DE); FEYERABEND, Konrad, 30625 Hannover (DE)
(74) Vertreter: Lauerwald, Jörg
(86) Internationale Anmeldenummer: PCT/EP2010/006870
(87) Internationale Veröffentlichungsnummer: WO 2011/063897

(56) Entgegenhaltungen:
- DE-A1-102005 023 665
- DE-A1-102007 014 427
- DE-C1- 19 611 359

## Beschreibung

Die Erfindung betrifft ein Verfahren zum Verhindern des Wegrollens eines Fahrzeugs, insbesondere eines Nutzfahrzeugs, wobei das Fahrzeug mit einer Druckluftaufbereitungsanlage (APU) und mindestens einem zugehörigen Drucksensor zur Erfassung mindestens eines Druckes in einem Bremskreis, insbesondere mit einer elektronischen Druckluftaufbereitungsanlage (E-APU), und einem selbstbremsenden System (beispielsweise ASR, ESP, FDR, EBS) ausgerüstet ist. Ferner betrifft die Erfindung ein Computerprogrammprodukt welches ein solches Verfahren ausführt. Des Weiteren betrifft die Erfindung eine elektronische Druckluftaufbereitungsanlage (E-APU) sowie ein selbstbremsendes System (ASR, ESP, FDR, EBS).

Insbesondere in skandinavischen Ländern ist es gesetzlich vorgeschrieben, dass die Parkbremse/Feststellbremse eines Fahrzeugs beim Auffüllen von Druckluft nur gelöst werden kann, wenn der Fahrzeugführer dies händisch vornimmt, d. h. zum Beispiel durch Betätigen eines Hebels, Ventils oder Schalters. Dies soll verhindern, dass das Fahrzeug ohne den Fahrzeugführer losrollen kann. Das Verhindern des Wegrollens des Fahrzeugs ist zwar nicht zwingend gesetzlich vorgeschrieben, allerdings haben sich Fahrzeugführer, insbesondere in Skandinavien, an diese Sicherheitsfunktion gewöhnt, weshalb auch weiterhin von Fahrzeugherstellern diese Funktionalität angeboten wird.

Eine solche Gefahrensituation tritt z. B. bei mit Druckluft gebremsten Nutzfahrzeugen auf, wenn das Fahrzeug an einem Hang abgestellt worden ist und die Druckluftspeicher über Nacht drucklos geworden sind. Das Fahrzeug wird zwar durch die als Federspeicherbremse ausgelegte Feststellbremse durch Federkraft in seiner derzeitigen Position gehalten, allerdings erfolgt, sobald der Fahrzeugführer den Motor des Fahrzeugs startet, das Auffüllen der Druckluftspeicher in einer festgelegten Reihenfolge. Üblicherweise werden hierbei zuerst die Druckluftspeicher der Betriebsbremskreise mit Druckluft befüllt, damit jederzeit ein Abbremsen des Fahrzeugs sichergestellt ist. Erst danach würde die Federspeicherbremse mit Druckluft beaufschlagt, wodurch diese gelöst wird. Würde der Fahrzeugführer also den Motor starten, und die Feststellbremse über eine Betätigungseinrichtung im Führerhaus des Fahrzeugs lösen wollen, so würde sich das Fahrzeug nicht in Bewegung setzen, da erst die Druckluftspeicher der Betriebsbremskreise gefüllt werden müssten. Wenn nun der Fahrzeugführer das Führerhaus verlässt um z. B. den Fehler für das Nicht-Losfahren des Fahrzeugs zu suchen oder z. B. die Scheiben zu reinigen, so würde in dieser Zeit der Kompressor, der die Druckluftspeicher mit Druckluft versorgt, weiterhin Druckluft fördern. Sobald die Druckluftspeicher der Betriebsbremskreise befüllt sind würde anschließend auch die Feststellbremse mit Druckluft beaufschlagt, was dazu führen würde, dass diese gelöst wird, wodurch sich das Fahrzeug in Bewegung setzt. Hierbei besteht die Gefahr, dass der Fahrzeugführer und/oder weitere Personen durch das führerlose Fahrzeug überrollt werden kann.

Um dies zu verhindern, gab es bisher verschiedene mechanische Lösungen mittels weiterer pneumatischer Ventile. Der Nachteil einer solchen mechanischen Lösung besteht unter anderem darin, dass hierdurch für verschiedene Länder unterschiedliche Systeme bereitgestellt werden müssen, wodurch es zu höheren Kosten kommt.

In der DE 10 2007 014427 A1 wird eine elektrische Feststellbremsanlage für ein Nutzfahrzeug und ein Verfahren zum Betreiben einer elektrischen Feststellbremsanlage beschrieben.

Daher ist es Aufgabe der vorliegenden Erfindung, ein kostengünstiges Verfahren zum Verhindern des Wegrollens eines Fahrzeugs, sowie ein Computerprogrammprodukt als auch eine elektronische Druckluftaufbereitungsanlage (E-APU) sowie ein selbstbremsendes System (EBS, ASR, FDR, ESP) bereitzustellen.

Diese Aufgabe wird durch die Patentansprüche 1, 12, 13 und 14 gelöst.

In einer vorteilhaften Ausführungsform der Erfindung werden die Drücke aus dem Feststellbremskreis über eigenständige Sensoren oder über elektrisch modulierte Signale oder bevorzugt über einen Datenbus (z.B. CAN Bus standardisiert nach SAE J 1939, Air Supply Pressure Botschaft, z.B. von der E-APU) im elektronischen Bremssystem (EBS) eingelesen.

In einer weiteren bevorzugten Ausführungsform wird das erfindungsgemäße Verfahren in der E-APU implementiert, indem die Drücke aus dem Feststellbremskreis über Sensoren in der E-APU eingelesen und von der Elektronik der E-APU ausgewertet werden. Die E-APU sendet, sofern die Betriebsbremse eingelegt werden soll, ein Signal an das elektronische Bremssystem (EBS).

In einer weiteren bevorzugten Ausführungsform wird das erfindungsgemäße Verfahren in einem eigenständigen Steuergerät realisiert, wobei dieses eigenständige Steuergerät mit der elektronischen Druckluftaufbereitungsanlage (E-APU) und dem selbstbremsenden System (FDR, ASR, ESP, EBS) kommuniziert.

In einer weiteren bevorzugten Ausführungsform sind die elektronische Druckluftaufbereitungsanlage (E-APU) und das selbstbremsende System (FDR, ASR, ESP, EBS) zu einem Gerät zusammengefasst, wobei das erfindungsgemäße Verfahren in diesem Gerät implementiert ist.

Im Weiteren wird immer von einer elektronischen Druckluftaufbereitungsanlage (E-APU) ausgegangen, wobei es für das hier beschriebene Verfahren allerdings nur erforderlich ist, dass Informationen, d. h. Druckwerte, mindestens eines Betriebsbremskreises vorhanden sind, aus denen man auf den Druck in dem Feststellbremskreis schließen kann. Somit ist das hier beschriebene Verfahren auch auf Fahrzeuge anwendbar, welche mindestens einen Druckwert eines Betriebsbremskreises ermitteln können und welche zusätzlich über ein selbstbremsendes System (FDR, ASR, ESP, EBS) verfügen.

Unter dem Begriff selbstbremsendes System (FDR, ASR, ESP, EBS) sollen Bremssysteme verstanden werden, welche es ermöglichen, dass das Fahrzeug automatisch, d. h. ohne Beteiligung des Fahrzeugführers, eingebremst werden kann. Zum Beispiel stellen bekannte Fahrdynamikregelungssysteme (FDR) bzw. elektronische Stabilitätsprogramme (ESP) oder auch Antriebsschlupfregelungssysteme (ASR) selbstbremsende Systeme gemäß dieser Definition dar. Ebenfalls stel len so genannte elektronische Bremssysteme (EBS) ein solch selbstbremsendes System dar, sofern dort das Fahrzeug automatisch eingebremst werden kann.

Unter dem Begriff Löseschwelle soll hierbei der Druck verstanden werden, welcher mindestens in der als Federspeicherbremszylinder ausgebildeten Feststellbremse vorhanden sein muss, damit die Feststellbremse sicher gelöst werden kann. Hierdurch ist sichergestellt, dass der Fahrzeugführer, wenn er die Feststellbremse lösen will, diese lösen kann und mit dem Fahrzeug direkt losfahren kann. Es tritt somit nicht die Situation auf, dass die Feststellbremse auf Grund eines zu niedrigen Druckes in dem Feststellbremskreis nicht gelöst werden kann, was ggf. den Fahrzeugführer dazu veranlassen könnte aus dem Fahrzeug auszusteigen. Beispielsweise kann man als eine Löseschwelle einen Druckwert von etwa 4 bar verwenden. Es ist sicherlich selbsterklärend, das diese Löseschwelle abhängig von Fahrzeugparametern, wie z. B. Fahrzeuggewicht, Anhängerbetrieb, etc., unterschiedlich hoch ausfallen kann. Somit kann die Löseschwelle je nach Fahrzeugparametern im Bereich von etwa 1 bar bis etwa 6 bar liegen. Vorzugsweise liegt die Löseschwelle bei etwa 4 bar.

Nachfolgend wird anhand von Figuren die bisher bekannten Funktionen als auch die erfindungsgemäße Lösung dargestellt. Hierbei zeigt
Fig. 1 eine erste bekannte Lösung mittels eines pneumatischen Ventils,
Fig. 2 eine zweite bekannte Lösung mittels eines Magnetventils, und
Fig. 3 ein Ablaufdiagramm der erfindungsgemäßen Lösung.

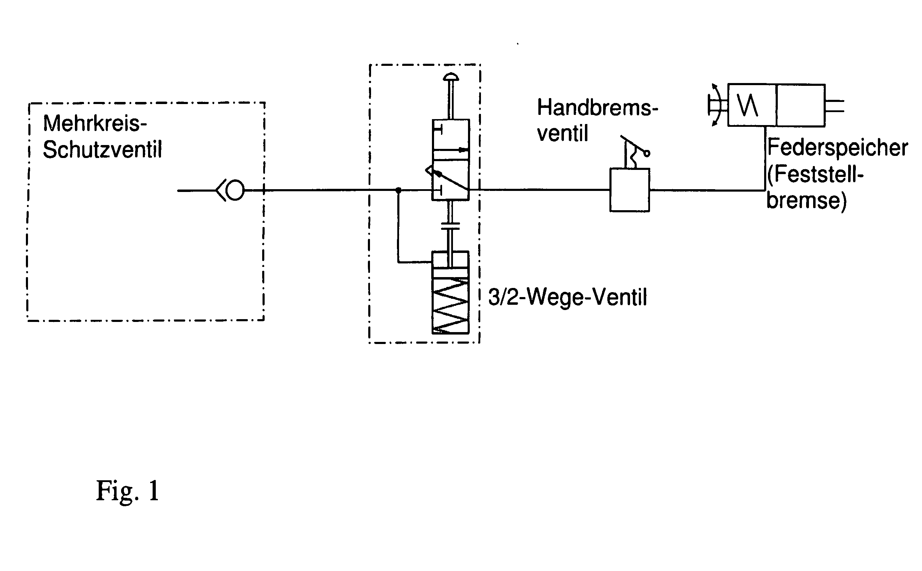

In Fig. 1 ist eine erste bekannte Lösung mit einem pneumatischen Ventil, dort als 3/2-Wege-Ventil dargestellt, im Feststellbremskreis gezeigt, wobei das pneumatische Ventil zufällt, wenn der Druck im Feststellbremskreis, das ist der Druckluftspeicher aus dem die Feststellbremse mit Druckluft versorgt wird, unter eine bestimmte Druckschwelle fällt. Um also die Feststellbremse lösen zu können muss einerseits die Feststellbremse (hier als Handbremsventil dargestellt) als auch das pneumatische Ventil händisch betätigt werden.

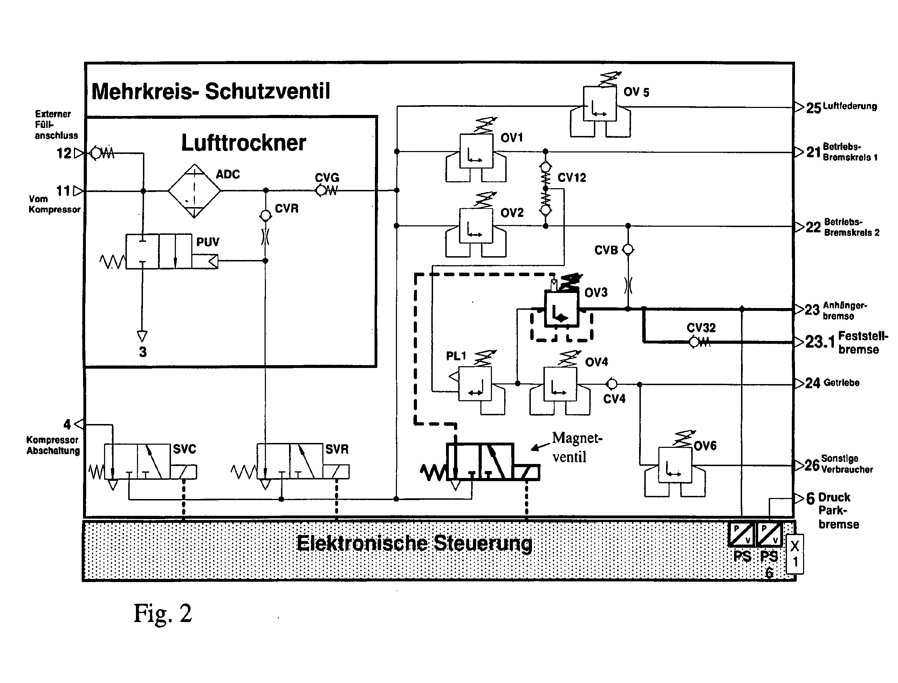

In Fig. 2 ist eine zweite bekannte Lösung mit einem Magnetventil dargestellt, wobei das Magnetventil in betätigtem Zustand verhindert, dass der Kreis 23 bzw. 23.1 (Feststellbremskreis) aufgefüllt wird. Hierbei schaltet eine Elektronische Steuerung das Magnetventil, wenn der Druck in der Feststellbremse abgefallen ist.

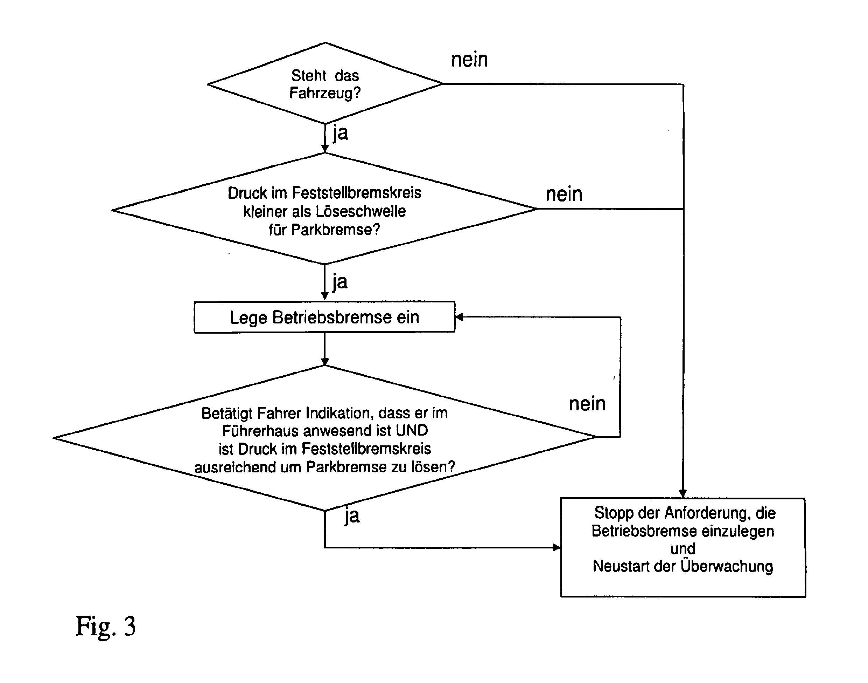

Fig. 3 stellt ein Ablaufdiagramm der erfindungsgemäßen Lösung dar. Hierbei wird in einem ersten Schritt überprüft, ob das Fahrzeug steht ("ja") oder fährt ("nein"). Diese Information kann beispielsweise mittels einer Abfrage/Überprüfung eines Geschwindigkeitssignals (Tachosignal, Raddrehzahlinformation) ermittelt werden. Wenn das Fahrzeug steht, wird in einem zweiten Schritt überprüft, ob der Druck im Feststellbremskreis kleiner als eine Löseschwelle für die Parkbremse/Feststellbremse ist. Unter dem Begriff Löseschwelle soll hierbei der Druck verstanden werden, welcher mindestens in der als Federspeicherbremszylinder ausgebildeten Feststellbremse vorhanden sein muss, damit die Feststellbremse sicher gelöst werden kann. Beispielsweise kann man als eine Löseschwelle einen Druckwert von etwa 4 bar verwenden. Wenn dies der Fall ist ("ja"), dann wird die Betriebsbremse eingelegt. Anschließend wird in einem dritten Schritt überprüft, ob der Fahrer/Fahrzeugführer eine Indikation (z. B. in Form eines Schalters, Tasters, Sitzbelegungsschalter oder eines Pedals) betätigt um anzuzeigen, dass er im Führerhaus anwesend ist. Erst wenn diese Betätigung der Indikation durchgeführt wurde und zusätzlich ausreichend Druck im Feststellbremskreis vorhanden ist um die Parkbremse/Feststellbremse zu lösen, kann das Fahrzeug bewegt werden, d. h. erst dann wird die Betriebsbremse gelöst. Solange der Fahrer die Indikation nicht betätigt hat oder nicht zusätzlich ausreichend Druck im Feststellbremskreis vorhanden ist, kann das Fahrzeug nicht bewegt werden wodurch natürlich auch das Wegrollen des Fahrzeugs verhindert wird.

Die Überprüfung, ob das Fahrzeug steht muss nicht zwangsweise erfolgen, es wäre auch denkbar, dass nur darauf erkannt wird, ob der Druck im Feststellbremskreis kleiner als eine Löseschwelle für die Parkbremse/Feststellbremse ist.

Der Druck im Feststellbremskreis kann hierbei aus Drucksignalen, beispielsweise von Drucksensoren in den jeweiligen Kreisen, ermittelt oder zumindest abgeschätzt werden. Ferner ist es auch möglich, den Druck im Feststellbremskreis aus den Betriebsbremskreisen 21 und 22 zumindest abzuschätzen und entsprechend zu verwenden.

In einer weiteren Ausgestaltung der Erfindung ist es auch möglich, das die Betriebsbremse bereits nach einer Betätigung der Indikation durch den Fahrzeugführer gelöst wird, da sich zu diesem Zeitpunkt der Fahrzeugführer offensichtlich im Führerhaus befindet, und erst anschließend wird überprüft, ob ausreichend Druck im Feststellbremskreis vorhanden ist um die Feststellbremse/Parkbremse zu lösen. Wenn kein ausreichender Druck im Feststellbremskreis vorhanden ist, kann die Betriebsbremse wieder betätigt werden um ein Wegrollen zu verhindern falls der Fahrzeugführer in der Zwischenzeit das Fahrzeug verlassen hat.

In einer weiteren Ausgestaltung der Erfindung ist es auch vorgesehen, dass die Betriebsbremse nur eingelegt wird, wenn erkannt wird, dass das Fahrzeug anfängt zu rollen.

Durch das beschriebene Verfahren wird also eine Standsicherheitsfunktion durch Anforderung an die Betriebsbremse bereitgestellt. Diese Lösung bietet gegenüber den herkömmlichen Lösungen eine kostengünstigere Verwirklichung Funktionalität, da dieses Verfahren bei einem selbstbremsenden System rein durch eine Software realisiert werden kann.

Beispielsweise kann ein elektronisches Bremssystem (EBS) nach einem Systemstart die Drücke im Feststellbremskreis (Parkbremskreis), die von der elektronischen Druckluftaufbereitungsanlage (E-APU) (oder einem anderen Gerät) gesendet werden, überwachen. Wenn ein druckloses/druckarmes System nach den Kriterien der hier beschriebenen Standsicherheitsfunktion erkannt wird, so wird die Betriebsbremse mit den Mitteln, die dem elektronischen Bremssystem (EBS) zur Verfügung stehen, eigenständig eingebremst (z. B. durch Öffnen des Einlassventils in den Achsmodulatoren).

Beispielsweise wertet die elektronische Druckluftaufbereitungsanlage (E-APU) die Drücke aus und sendet bei Erkennung der Bedingung für Standsicherheitfunktion eine Nachricht an das selbstbremsende System (EBS, ASR, FDR, ESP), damit die Betriebsbremse eingelegt wird. Das selbstbremsende System (EBS, ASR, FDR, ESP) wertet diese Botschaft aus und bremst das Fahrzeug mit der Betriebsbremse ein, solange die Botschaft gesendet wird.

Statt einer Botschaft kann auch eine analoge Signalleitung zwischen elektronischer Druckluftaufbereitungsanlage (E-APU) und dem selbstbremsenden System (EBS, ASR, FDR, ESP) genutzt werden.

Beispielsweise kann als eine standardisierte CAN SAE J1939-Botschaft eine so genannte XBR (eXternal Brake Request) benutzt werden.

Wenn also ein druckloses System, d. h. kein Druck in den Druckluftbehältern der Betriebsbremskreise des Fahrzeugs, bei einem Fahrzeugstillstand erkannt wird (z. B. nach Einschalten der elektronischen Druckluftaufbereitung (E-APU) ist der Druck im Feststellbremskreis (Parkbremskreis) kleiner 4 bar), dann bremst das im Fahrzeug vorhandene selbstbremsende System das Fahrzeug eigenständig, d. h. ohne den Fahrzeugführer, mit der Betriebsbremse ein, um ein Wegrollen des Fahrzeugs beim Befüllen des Systems zu verhindern. Erst wenn der Fahrer seine Anwesenheit im Führerhaus signalisiert (Indikation), z. B. durch Betätigung des Brems- oder Kupplungspedals oder durch Gasgeben, und der Feststellbremskreis genügend Druck hat, wird die Betriebsbremse gelöst.

Dabei muss die Betriebsbremse solange belüftet (d. h. gefüllt) werden, bis genug Druck im System vorhanden ist, dass die Betriebsbremse das Fahrzeug sicher hält. Dies ist u. U. erst nach einiger Zeit der Fall, wenn der Kompressor genügend Druck in den Betriebsbremskreisen aufgebaut hat. Da nach dem Stand der Technik mindestens ein Betriebsbremskreis vor dem Feststellbremskreis aufgefüllt wird, ist ein sicheres Bremsen des Fahrzeugs über den Betriebsbremskreis sichergestellt, bevor sich die Feststellbremse öffnet.

Über den grundsätzlichen Erfindungsgedanken hinaus kann auch eine Kommunikation zwischen den jeweiligen Steuergeräten, z. B. zwischen dem Steuergerät der elektronischen Druckluftaufbereitungsanlage (E-APU) und dem Steuergerät des selbstbremsenden Systems (ASR, FDR, EBS, ESP) dahingehend weiter abgesichert werden, das bei einem Ausfall des elektrischen Stromes an der elektronischen Druckluftaufbereitungsanlage (E-APU) keine Botschaft/Signal an das selbstbremsende System (ASR, FDR, EBS, ESP) gesendet wird, wodurch weiterhin das selbstbremsende System (ASR, FDR, EBS, ESP) die Betriebsbremsen betätigt wodurch ein Fahren bzw. Wegrollen des Fahrzeugs verhindert wird.

Fällt beim selbstbremsenden System (ASR, FDR, EBS, ESP) der elektrische Strom aus (erkennbar, da entsprechende CAN-Botschaften nicht anliegen), so kann die elektronische Druckluftaufbereitungsanlage (E-APU) Druck ablassen (z. B. mittels des so genannten "Purge Valve") oder den Kompressor ausschalten, um zu verhindern, dass das Fahrzeug Druck in der Feststellbremse aufbaut, wodurch diese gelöst werden würde. Das Fahrzeug wird hierdurch wiederum am Wegrollen bzw. am Wegfahren gehindert.

Somit bietet die hier vorgeschlagene Lösung die Vorteile, dass eine Kostenersparnis dadurch erreicht wird, dass die beschriebene Sicherheitsfunktion durch eine Anpassung der Software bei einer vorhandenen elektronischen Druckluftaufbereitungsanlage (E-APU) in Verbindung mit einem selbstbremsenden System (ASR, FDR, EBS, ESP) realisiert wird. Des Weiteren werden keine zusätzlichen mechanischen Bauteile benötigt. Eine mittels Software durchgeführte Lösung bietet darüber hinaus den Vorteil, dass diese schnell in vorhandene Serienprodukte umgesetzt werden kann. Weiterhin besteht der Vorteil, dass durch eine Verringerung der Komplexität, d. h. weniger Bauteile, die potentiell ausfallen können, eine Qualitätsverbesserung erzielt wird.

In einer weiteren Ausgestaltung der Erfindung ist vorgesehen, das, unabhängig von dem vorhandenen Druck im System, bei jedem Start des Fahrzeugs ("Zündung-Ein") die Betriebsbremse automatisch betätigt wird.

In einer weiteren Ausgestaltung der Erfindung wird die Betriebsbremse nur nach einem Start des Fahrzeugs ("Zündung-Ein") betätigt, und nicht nach jedem Halt des Fahrzeugs, wodurch die Schaltbedingungen für die Betätigung der Betriebsbremse gemäß der hier vorgestellten Standsicherheitsfunktion nicht jedes Mal erneut überprüft werden.

Seitens der hier beschriebenen Erfindung ist es auch vorgesehen, dass die beschriebenen Ausführungsformen, sofern sich diese nicht widersprechen, auch miteinander kombiniert werden können.

## Patentansprüche

1. Verfahren zum Verhindern des Wegrollens eines Fahrzeugs, wobei das Fahrzeug mit mindestens einem Drucksensor in mindestens einem Bremskreis und einem selbstbremsenden System (ASR, ESP, FDR, EBS) sowie mit einer Feststellbremse ausgestattet ist, **gekennzeichnet durch** folgende Schritte:
- Ermitteln, ob der Druck in dem Druckluftkreis aus dem die Feststellbremse gespeist wird unterhalb einer Löseschwelle liegt,
- Betätigen der Betriebsbremse, wenn der Druck in dem Druckluftkreis, aus dem die Feststellbremse gespeist wird unterhalb der Löseschwelle liegt.

2. Verfahren nach Anspruch 1, **dadurch gekennzeichnet, dass** in einem weiteren Schritt ermittelt wird, ob das Fahrzeug steht.

3. Verfahren nach Anspruch 1 oder 2, **dadurch gekennzeichnet, dass** die Betriebsbremse nur betätigt wird, wenn erkannt wird, dass das Fahrzeug beginnt zu rollen.

4. Verfahren nach mindestens einem der vorherigen Ansprüche, **dadurch gekennzeichnet, dass** in einem weiteren Schritt ermittelt wird, ob der Fahrzeugführer eine Indikation betätigt hat.

5. Verfahren nach mindestens einem der vorherigen Ansprüche, **dadurch gekennzeichnet, dass** die Betriebsbremse gelöst wird, wenn der Fahrzeugführer eine Indikation betätigt hat.

6. Verfahren nach Anspruch 5, **dadurch gekennzeichnet, dass** die Betriebsbremse nur gelöst wird, wenn zusätzlich der Druck in dem Druckluftkreis aus dem die Feststellbremse gespeist wird ausreichend ist um die Feststellbremse zu lösen.

7. Verfahren nach einem der Ansprüche 2 oder 3, **dadurch gekennzeichnet, dass** mittels eines Geschwindigkeitssignals, eines Tachosignals oder eines Raddrehzahlsensorsignal ermittelt wird, ob das Fahrzeug steht bzw. rollt.

8. Verfahren nach Anspruch 1, **dadurch gekennzeichnet, dass** als Löseschwelle ein Druckwert im Bereich von etwa 1 bar bis etwa 6 bar verwendet wird.

9. Verfahren nach Anspruch 1, **dadurch gekennzeichnet, dass** als Löseschwelle ein Druckwert von 4 bar verwendet wird.

10. Verfahren nach Anspruch 4, **dadurch gekennzeichnet, dass** als Indikation ein Signal eines Schalters oder Tasters oder einer Sitzbelegungseinrichtung oder eines Pedals verwendet wird.

11. Verfahren nach einem der vorherigen Ansprüche, **dadurch gekennzeichnet, dass** die Betriebsbremse nur nach einem Start des Fahrzeugs ("Zündung-Ein") betätigt wird.

12. Computerprogrammprodukt, **dadurch gekennzeichnet, dass** dieses ein Verfahren nach mindestens einem der Ansprüche 1 bis 11 ausführt.

13. Elektronische Druckluftaufbereitungsanlage (E-APU), **dadurch gekennzeichnet, dass** in einem Steuergerät der elektronischen Druckluftaufbereitungsanlage (E-APU) ein Verfahren nach mindestens einem der Ansprüche 1 bis 11 implementiert ist.

14. Selbstbremsendes System (ASR, ESP, FDR, EBS) **dadurch gekennzeichnet, dass** in einem Steuergerät des selbstbremsenden Systems (ASR, ESP, FDR, EBS) ein Verfahren nach mindestens einem der Ansprüche 1 bis 11 implementiert ist.

## Claims

1. Method for preventing a vehicle from rolling away, wherein the vehicle is equipped with at least one pressure sensor in at least one brake circuit and with self-braking system (ASR, ESP, FDR, EBS) and also with a parking brake, **characterized by** the following steps:
- determining whether the pressure in the compressed-air circuit from which the parking brake is fed is below a release threshold,
- operating the service brake if the pressure in the compressed-air circuit from which the parking brake is fed is below the release threshold.

2. Method according to Claim 1, **characterized in that**, it is determined in a further step whether the vehicle is stationary.

3. Method according to Claim 1 or 2, **characterized in that** the service brake is operated only if it is detected that the vehicle begins to roll.

4. Method according to at least one of the preceding claims, **characterized in that** it is determined in a further step whether the vehicle driver has operated an indication means.

5. Method according to at least one of the preceding claims, **characterized in that** the service brake is released if the vehicle driver has operated an indication means.

6. Method according to Claim 5, **characterized in that** the service brake is released only if the pressure in the compressed-air circuit from which the parking brake is fed is additionally sufficient to release the parking brake.

7. Method according to either of Claims 2 and 3, **characterized in that** a speed signal, a speedometer signal or a wheel rotation speed sensor signal is used to determine whether the vehicle is stationary or rolling.

8. Method according to Claim 1, **characterized in that** a pressure value in the range of approximately 1 bar to approximately 6 bar is used as the release threshold.

9. Method according to Claim 1, **characterized in that** a pressure value of 4 bar is used as the release threshold.

10. Method according to Claim 4, **characterized in that** a signal from a switch or pushbutton or a seat-occupation device or a pedal is used as the indication means.

11. Method according to one of the preceding claims, **characterized in that** the service brake is operated only after the vehicle is started ("Ignition on").

12. Computer program product, **characterized in that** it executes a method according to at least one of Claims 1 to 11.

13. Electronic compressed-air processing system (E-APU), **characterized in that** a method according to at least one of Claims 1 to 11 is implemented in a controller of the electronic compressed-air processing system (E-APU).

14. Self-braking system (ASR, ESP, FDR, EBS), **characterized in that** a method according to at least one of Claims 1 to 11 is implemented in a controller of the self-braking system (ASR, ESP, FDR, EBS).

## Revendications

1. Procédé pour empêcher la dérive d'un véhicule, le véhicule étant équipé d'au moins un capteur de pression dans au moins un circuit de freinage et d'un système de freinage automatique (ASR, ESP, FDR, EBS) ainsi que d'un frein de stationnement, **caractérisé par** les étapes suivantes :
- détermination, de manière à établir si la pression dans le circuit d'air comprimé alimentant le frein de stationnement est en dessous d'un seuil de desserrage,
- actionnement du frein de service si la pression dans le circuit d'air comprimé alimentant le frein de stationnement est en dessous du seuil de desserrage.

2. Procédé selon la revendication 1, **caractérisé en ce que** l'on détermine, dans une étape supplémentaire, si le véhicule est au repos.

3. Procédé selon la revendication 1 ou 2, **caractérisé en ce que** le frein de service n'est actionné que si l'on a reconnu que le véhicule commence à rouler.

4. Procédé selon au moins l'une quelconque des revendications précédentes, **caractérisé en ce que** l'on détermine, dans une étape supplémentaire, si le conducteur du véhicule a actionné un indicateur.

5. Procédé selon au moins l'une quelconque des revendications précédentes, **caractérisé en ce que** le frein de service est desserré lorsque le conducteur du véhicule a actionné un indicateur.

6. Procédé selon la revendication 5, **caractérisé en ce que** le frein de service n'est desserré que lorsque la pression dans le circuit d'air comprimé alimentant le frein de stationnement est en outre suffisante pour desserrer le frein de stationnement.

7. Procédé selon l'une quelconque des revendications 2 ou 3, **caractérisé en ce que** l'on détermine au moyen d'un signal de vitesse, d'un signal du tachymètre ou d'un signal d'un capteur de vitesse de roue, si le véhicule est au repos ou en mouvement.

8. Procédé selon la revendication 1, **caractérisé en ce que** l'on utilise comme seuil de desserrage une valeur de pression de l'ordre d'environ 1 bar à environ 6 bar.

9. Procédé selon la revendication 1, **caractérisé en ce que** l'on utilise comme seuil de desserrage une valeur de pression de 4 bar.

10. Procédé selon la revendication 4, **caractérisé en ce que** l'on utilise comme indicateur un signal d'un commutateur ou d'une touche ou d'un dispositif d'occupation de siège ou d'une pédale.

11. Procédé selon l'une quelconque des revendications précédentes, **caractérisé en ce que** le frein de service n'est actionné qu'après un démarrage du véhicule ("allumage initié").

12. Produit de programme informatique, **caractérisé en ce que** celui-ci met en oeuvre un procédé selon au moins l'une quelconque des revendications 1 à 11.

13. Installation électronique de préparation d'air comprimé (E-APU), **caractérisée en ce que** dans un appareil de commande de l'installation électronique de préparation d'air comprimé (E-APU) est mis en oeuvre un procédé selon au moins l'une quelconque des revendications 1 à 11.

14. Système de freinage automatique (ASR, ESP, FDR, EBS), **caractérisé en ce que** dans un appareil de commande du système de freinage automatique (ASR, ESP, FDR, EBS) est mis en oeuvre un procédé selon au moins l'une quelconque des revendications 1 à 11.
